# EUROPEAN PATENT APPLICATION

(11) **EP 4 464 548 A1**
(43) Date of publication of application: **20.11.2024**
(21) Application number: 24172082.0
(22) Date of filing: 24.04.2024
(51) Int. Cl.: B60L 58/26, B60L 58/30, H01M 8/065, H01M 10/613, H01M 10/625, H01M 10/63, H01M 10/66, H01M 8/0438, H01M 16/00, H01M 8/04014, H01M 10/48

(54) **COOLING SYSTEM FOR SECONDARY BATTERY**

(30) Priority: 12.05.2023 JP 2023079345
(71) Applicant: TOYOTA BOSHOKU KABUSHIKI KAISHA, Kariya-shi, Aichi 448-8651 (JP)
(72) Inventor: KAMIO, Yoshiki, Kariya-shi, 448-8651 (JP)
(74) Representative: TBK

(57) **Abstract**

[Object] To cool a secondary battery without providing a dedicated cooling device.

[Solution] A cooling system (A) for a secondary battery (10) includes: a secondary battery (10) including a power storage module (12) and a heat absorbing flow path (15) that is a flow path of a refrigerant for cooling the power storage module (12); a fuel cell stack (20) that generates electric power by being fed with fuel; a fuel storage device (24) that stores the fuel in a state where the fuel can be discharged as gas; a first fuel flow path (25) that feeds the fuel stored in the fuel storage device (24) to the heat absorbing flow path (15) in a gaseous state; and a second fuel flow path (29) that feeds the fuel having passed through the heat absorbing flow path (15) to the fuel cell stack (20).

## Description

### Technical Field

The present invention relates to a cooling system for a secondary battery.

### Background Art

Patent Literature 1 discloses a cooling device that cools a secondary battery mounted on a vehicle. The cooling device includes a cooler that introduces outside air and generates cooling air, and a feed duct that feeds the cooling air generated by the cooler to the secondary battery. When the temperature of the secondary battery is equal to or higher than a specified temperature, the cooler operates to cool the secondary battery.

### Citation List

### Patent Literature

Patent Literature 1: JP 2021-176133 A

### Summary of Invention

### Technical Problem

The above-mentioned cooling device is a dedicated device having only a function of cooling the secondary battery. Providing a dedicated cooling device has problems such as increase in cost, need for an installation space, and increase in weight.

The present disclosure has been completed based on the above circumstances, and an object of the present disclosure is to cool a secondary battery without providing a dedicated cooling device.

### Solution to Problem

A cooling system for a secondary battery according to the present disclosure includes:
a secondary battery including a power storage module and a heat absorbing flow path that is a flow path of a refrigerant for cooling the power storage module;
a fuel cell stack that generates electric power by being fed with fuel;
a fuel storage device that stores the fuel in a state where the fuel can be discharged as gas;
a first fuel flow path that feeds the fuel stored in the fuel storage device to the heat absorbing flow path in a gaseous state; and
a second fuel flow path that feeds the fuel having passed through the heat absorbing flow path to the fuel cell stack.

### Advantageous Effects of Invention

The cooling system of the present disclosure can cool the secondary battery without providing a dedicated cooling device.

### Brief Description of Drawings

Fig. 1 is a cross-sectional view illustrating a schematic structure of a secondary battery of a first embodiment.
Fig. 2 is a block diagram illustrating a configuration of a cooling system of the first embodiment.
Fig. 3 is a block diagram illustrating a configuration of a cooling system according to a second embodiment.

### Description of Embodiments

Desirable embodiments of the present disclosure will now be described. Any combination of a plurality of the following embodiments within a range not causing inconsistency is also included in the embodiments for carrying out the invention.
(1) A cooling system for a secondary battery according to the present disclosure includes: a secondary battery including a power storage module and a heat absorbing flow path that is a flow path of a refrigerant for cooling the power storage module; a fuel cell stack that generates electric power by being fed with fuel; a fuel storage device that stores the fuel in a state where the fuel can be discharged as gas; a first fuel flow path that feeds the fuel stored in the fuel storage device to the heat absorbing flow path in a gaseous state; and a second fuel flow path that feeds the fuel having passed through the heat absorbing flow path to the fuel cell stack.
   According to the present disclosure, when the fuel that is stored in the fuel storage device in a state where the fuel can be discharged as gas is fed to the heat absorbing flow path in a state of low-pressure gas by adiabatic expansion, the vaporized gas exerts a function as a refrigerant in the process of passing through the heat absorbing flow path, and takes heat from the power storage module. The vaporized gas that has passed through the heat absorbing flow path is fed to the fuel cell stack to be consumed as fuel for electric power generation. Since the fuel for the fuel cell stack is also used as the refrigerant for cooling the secondary battery, a dedicated refrigerant for cooling the secondary battery is unnecessary. Therefore, the secondary battery can be cooled without providing a dedicated cooling device.
(2) In (1), it is preferable that a valve device provided in the first fuel flow path, and a bypass flow path that connects the valve device and the fuel cell stack are provided, and that the valve device has a function of adjusting a flow rate of the fuel fed to the heat absorbing flow path, and a function of adjusting a flow rate of the fuel fed to the fuel cell stack via the bypass flow path. According to this configuration, it is possible to perform the following operations individually: switching between feed and feed stop of the fuel to the heat absorbing flow path, adjustment of an amount of the fuel fed to the heat absorbing flow path, switching between feed and feed stop of the fuel to the fuel cell stack via the bypass flow path, and adjustment of an amount of the fuel fed to the fuel cell stack via the bypass flow path, based on a temperature of the secondary battery, an amount of electric power generation required for the fuel cell stack, and the like.
(3) In (2), it is preferable that a temperature sensor that detects a temperature of the secondary battery, and a control device that controls the valve device based on a detection value of the temperature sensor are provided. According to this configuration, since feed of the fuel to the heat absorbing flow path can be controlled by controlling the valve device according to the temperature of the secondary battery, overheating and supercooling of the secondary battery can be prevented. An amount of the fuel fed to the fuel cell stack via the bypass flow path can be appropriately adjusted in accordance with the change of the flow rate to the heat absorbing flow path.
(4) In (1), it is preferable that a first valve device that is provided in the first fuel flow path and adjusts a flow rate of the fuel in the first fuel flow path, a direct feed flow path that feeds the fuel stored in the fuel storage device to the fuel cell stack through a path that does not pass through the heat absorbing flow path, and a second valve device that is provided in the direct feed flow path and adjusts a flow rate of the fuel in the direct feed flow path are provided. According to this configuration, it is possible to perform the following operations individually: switching between feed and feed stop of the fuel to the heat absorbing flow path, adjustment of an amount of the fuel fed to the heat absorbing flow path, switching between feed and feed stop of the fuel to the fuel cell stack via the direct feed flow path, and adjustment of an amount of the fuel fed to the fuel cell stack via the direct feed flow path, based on a temperature of the secondary battery, an amount of electric power generation required for the fuel cell stack, and the like.
(5) In (4), it is preferable that a temperature sensor that detects a temperature of the secondary battery, and a control device that controls the first valve device and the second valve device based on a detection value of the temperature sensor are provided. According to this configuration, since feed of the fuel to the heat absorbing flow path can be controlled by controlling the first valve device according to the temperature of the secondary battery, overheating and supercooling of the secondary battery can be prevented. By controlling the second valve device in accordance with the change of the flow rate to the heat absorbing flow path, an amount of the fuel fed to the fuel cell stack by the direct feed flow path can be appropriately adjusted.

### <First Embodiment>

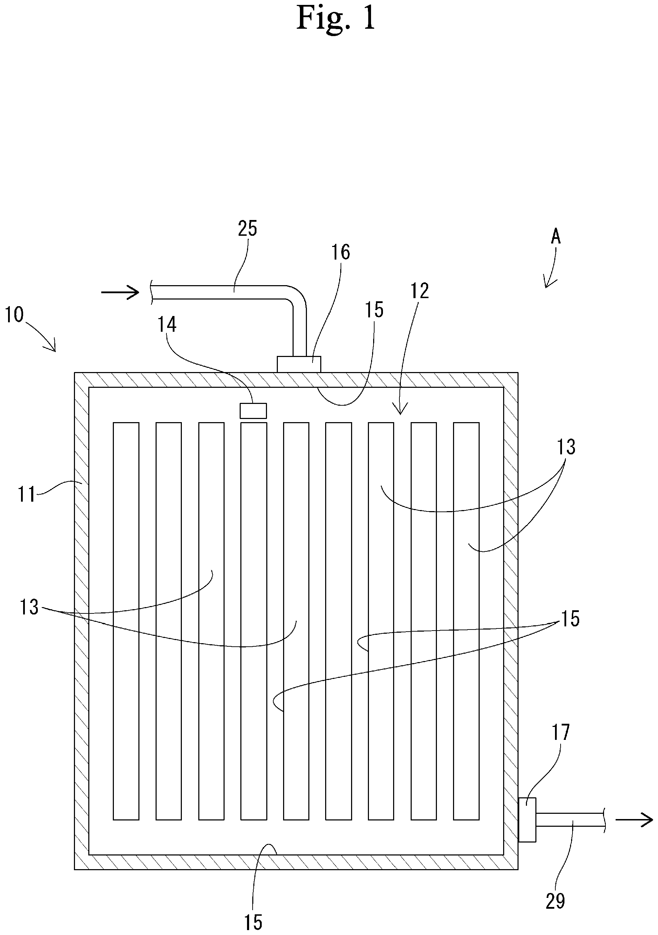

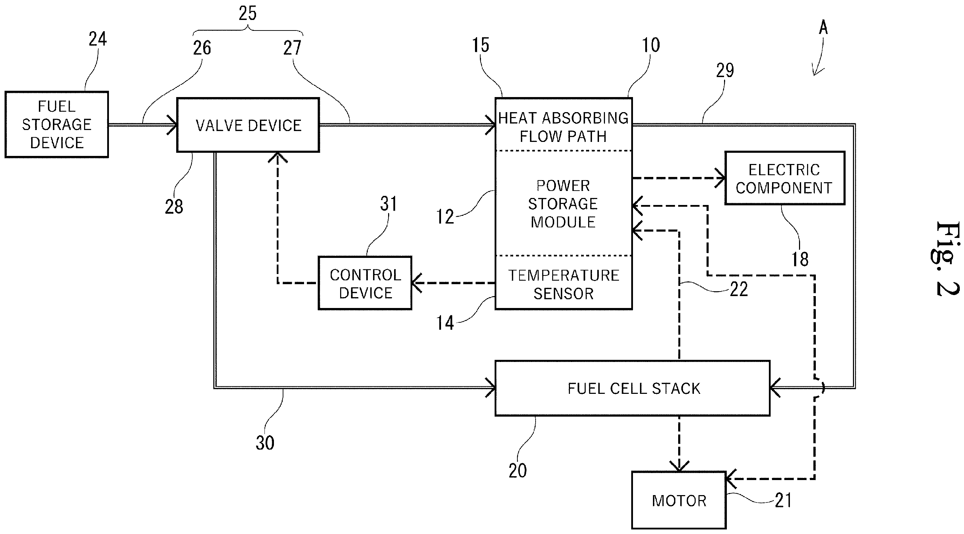

A first embodiment embodying the present disclosure will be described with reference to Figs. 1 and 2. Note that the present invention is not limited to these exemplifications, but is indicated by the claims, and includes all modifications within the meaning and scope equivalent to the claims.

A cooling system A of the first embodiment is mounted on a vehicle, for example, and includes a secondary battery 10, a fuel cell stack 20, a fuel storage device 24, a valve device 28, and a control device 31. The secondary battery 10 includes a case 11 having airtightness, a power storage module 12, and a temperature sensor 14. The power storage module 12 includes a plurality of flat cells 13 arranged in parallel at intervals. Each of the cells 13 is a member of a well-known form that accommodates, in an exterior body made of a laminate sheet, a laminated electrode body (not illustrated) in which a plurality of negative electrode plates, a plurality of positive electrode plates and a plurality of separators are laminated, and an electrolytic solution (not illustrated). The secondary battery 10 feeds electric power to electric components 18 mounted on the vehicle. The secondary battery 10 has a peak assist function of directly feeding power to a motor 21 when an output of the fuel cell stack 20 is insufficient. Similarly, the secondary battery 10 has a storage function of collecting and storing regenerative power from the motor 21.

The power storage module 12 is accommodated in the case 11. A temperature sensor 14 that detects a temperature of the power storage module 12 in the case 11 is provided at a position in contact with the cell 13 or a position close to the cell 13. In the case 11 in which the power storage module 12 is accommodated, a heat absorbing flow path 15 for allowing a refrigerant for cooling the power storage module 12 to flow is formed. A space between the adjacent cells 13 and a space between the power storage module 12 and an inner surface of the case 11 constitute the heat absorbing flow path 15. An inflow port 16 that allows the inside and the outside of the case 11 to communicate with each other is provided on a top plate of the case 11. An outflow port 17 that allows the inside and the outside of the case 11 to communicate with each other is provided at a lower end of a side plate of the case 11.

The fuel cell stack 20 is a device that generates electric power by reacting fuel (not illustrated) fed to the fuel cell stack 20 with oxygen. The electric power generated in the fuel cell stack 20 is fed to the motor 21 for vehicle traveling, an air conditioner (not illustrated), and the like. Excess electric power that has not been consumed among the electric power generated in the fuel cell stack 20 is fed to the power storage module 12 via a charging circuit 22 and charged therein.

The fuel fed to the fuel cell stack 20 is stored in the fuel storage device 24 in a state where the fuel can be discharged as gas. The fuel storage device 24 is configured to store an occlusion alloy in a tank. In the present embodiment, hydrogen is used as the fuel. Since an inversion temperature of the Joule-Thomson effect of hydrogen is as low as -80°C, the temperature of hydrogen rises, in an environment where the cooling system A is mounted and used on a vehicle, as hydrogen discharged as gas adiabatically expands. Therefore, in this first embodiment, hydrogen is occluded in the occlusion alloy in a solid solution state or in a chemically bonded state. As the occlusion alloy, a magnesium-based alloy, a vanadium-based alloy, or the like is used. The fuel stored in the fuel storage device 24 is released from the occlusion alloy, and is fed to the secondary battery 10 and the fuel cell stack 20 in a state of being adiabatically expanded. The fuel released from the occlusion alloy has a temperature lower than normal temperature due to an endothermic reaction at the time of release.

An upstream end of a first fuel flow path 25 is connected to the fuel storage device 24. A downstream end of the first fuel flow path 25 is connected to the inflow port 16 of the case 11 of the secondary battery 10. The first fuel flow path 25 is a flow path that feeds the fuel stored in the fuel storage device 24 to the heat absorbing flow path 15 in a vaporized gas state. A valve device 28 is provided in the middle of the first fuel flow path 25. A region of the first fuel flow path 25 upstream of the valve device 28 functions as an upstream flow path 26 that feeds the fuel stored in the fuel storage device 24 to the valve device 28. A region of the first fuel flow path 25 downstream of the valve device 28 functions as a downstream flow path 27 that feeds the fuel from the valve device 28 to the heat absorbing flow path 15. An upstream end of a second fuel flow path 29 is connected to the outflow port 17 of the secondary battery 10. A downstream end of the second fuel flow path 29 is connected to the fuel cell stack 20. The second fuel flow path 29 is a flow path that feeds the fuel having passed through the heat absorbing flow path 15 to the fuel cell stack 20.

An upstream end of a bypass flow path 30 branched from the first fuel flow path 25 is connected to the valve device 28. A downstream end of the bypass flow path 30 is connected to the fuel cell stack 20. The bypass flow path 30 is a flow path that feeds the fuel stored in the fuel storage device 24 to the fuel cell stack 20 in a vaporized gas state without passing through the heat absorbing flow path 15 (secondary battery 10). The valve device 28 includes an opening/closing mechanism (not illustrated) that opens and closes a flow path from the upstream flow path 26 to the downstream flow path 27 and a flow path from the upstream flow path 26 to the bypass flow path 30, individually. The valve device 28 includes a flow rate adjustment mechanism (not illustrated) that adjusts a flow rate of the fuel in each flow path in a state where these flow paths are opened.

The opening/closing mechanism and the flow rate adjustment mechanism of the valve device 28 are controlled by a control device 31 including a vehicle ECU. Detection information from the temperature sensor 14, operation information of an accelerator pedal during traveling of the vehicle, operation information of a steering wheel, operation information of a brake pedal, and the like are input to the control device 31. The control device 31 controls the opening/closing mechanism and the flow rate adjustment mechanism of the valve device 28 based on the input various types of information described above.

Next, the operation of the first embodiment will be described. When the temperature of the secondary battery 10 is within a normal range and the power storage module 12 does not need to be cooled, the valve device 28 closes a flow path to the downstream flow path 27 and stops the fuel feed to the downstream flow path 27 by the control of the control device 31. During this period, when electric power generation is required, under the control of the control device 31, the valve device 28 opens a flow path from the upstream flow path 26 to the bypass flow path 30, and feeds fuel to the fuel cell stack 20 through a path passing through the upstream flow path 26 and the bypass flow path 30.

When the temperature of the secondary battery 10 rises, the control device 31 controls the valve device 28 on the basis of detection information from the temperature sensor 14, so that a flow path from the upstream flow path 26 to the downstream flow path 27 is opened, and low-temperature fuel (vaporized gas) is fed as a refrigerant into the heat absorbing flow path 15. The fuel in the vaporized gas state takes away the heat of the cells 13 in the process of passing through the heat absorbing flow path 15. Accordingly, the power storage module 12 of the secondary battery 10 is cooled. The fuel that has passed through the heat absorbing flow path 15 is fed to the fuel cell stack 20 via the second fuel flow path 29.

While the secondary battery 10 is cooled, the fuel cell stack 20 generates electric power by the fuel fed via the heat absorbing flow path 15. When an electric power generation amount is insufficient only by the fuel passing through the heat absorbing flow path 15, the fuel is fed to the fuel cell stack 20 through the bypass flow path 30. In a case where more electric power than necessary is generated in the fuel cell stack 20 while the secondary battery 10 is cooled, surplus electric power of the electric power generated in the fuel cell stack 20 is fed to the power storage module 12 through the charging circuit 22 to charge the secondary battery 10.

The cooling system A of the first embodiment includes the secondary battery 10, the fuel cell stack 20 that generates electric power by being fed with fuel, the fuel storage device 24 that stores the fuel in a state where the fuel can be discharged as gas, a first thermal expansion member, and the second fuel flow path 29. The secondary battery 10 includes the power storage module 12 and the heat absorbing flow path 15 that is a flow path of a refrigerant for cooling the power storage module 12. The first fuel flow path 25 feeds the fuel stored in the fuel storage device 24 to the heat absorbing flow path 15 in a vaporized gas state. The second fuel flow path 29 feeds the fuel that has passed through the heat absorbing flow path 15 to the fuel cell stack 20.

When the fuel stored in the fuel storage device 24 in a state where the fuel can be discharged as gas is fed to the heat absorbing flow path 15 in a state of being adiabatically expanded by vaporization reaction, the vaporized gas exerts a function as a refrigerant in the process of passing through the heat absorbing flow path 15 and takes heat of the power storage module 12. The vaporized gas that has passed through the heat absorbing flow path 15 is fed to the fuel cell stack 20 to be consumed as fuel for electric power generation. Since the fuel for the fuel cell stack 20 is also used as the refrigerant for cooling the secondary battery 10, a dedicated refrigerant for cooling the secondary battery 10 is unnecessary. Therefore, the secondary battery 10 can be cooled without providing a dedicated cooling system.

The cooling system A includes the valve device 28 provided in the first fuel flow path 25 and the bypass flow path 30. The bypass flow path 30 connects the valve device 28 and the fuel cell stack 20. The valve device 28 has a flow rate adjustment function of adjusting the flow rate of the fuel fed to the heat absorbing flow path 15 and a flow rate adjustment function of adjusting the flow rate of the fuel fed to the fuel cell stack 20 through the bypass flow path 30. The flow rate adjustment function also includes a function of reducing the flow rate up to zero and thereby closing the path of the fuel. According to this configuration, it is possible to perform the following operations individually: switching between feed and feed stop of the fuel to the heat absorbing flow path 15, adjustment of an amount of the fuel fed to the heat absorbing flow path 15, switching between feed and feed stop of the fuel to the fuel cell stack 20 via the bypass flow path 30, and adjustment of an amount of the fuel fed to the fuel cell stack 20 via the bypass flow path 30, based on a temperature of the secondary battery 10, an amount of electric power generation required for the fuel cell stack 20, and the like.

The cooling system A includes the temperature sensor 14 that detects a temperature of the secondary battery 10, and the control device 31 that controls the valve device 28 based on a detection value of the temperature sensor 14. Based on the temperature of the secondary battery 10, the traveling state, the accelerator work, the use state of the electric components 18, and the like, the control device 31 switches a feed form of fuel by the valve device 28 to the heat absorbing flow path 15 and the fuel cell stack 20, to the following four modes.

In the first mode, fuel is fed to the heat absorbing flow path 15, and fuel is fed to the fuel cell stack 20 via the bypass flow path 30. In the second mode, fuel is fed to the heat absorbing flow path 15, and feed of fuel to the fuel cell stack 20 via the bypass flow path 30 is stopped. In the third mode, feed of fuel to the heat absorbing flow path 15 is stopped, and fuel is fed to the fuel cell stack 20 via the bypass flow path 30. In the fourth mode, feed of fuel to the heat absorbing flow path 15 and feed of fuel to the fuel cell stack 20 via the bypass flow path 30 are stopped.

According to this configuration, since the feed of the fuel to the heat absorbing flow path 15 can be controlled by controlling the valve device 28 according to the temperature of the secondary battery 10, overheating and supercooling of the secondary battery 10 can be prevented. An amount of the fuel fed to the fuel cell stack 20 via the bypass flow path 30 can be appropriately adjusted in accordance with the change of the flow rate to the heat absorbing flow path 15.

In a state in which the fuel is fed to the heat absorbing flow path 15 of the secondary battery 10, low-temperature fuel flows into the case 11 (heat absorbing flow path 15) from the inflow port 16 disposed on the top plate of the case 11, and flows out of the case 11 (heat absorbing flow path 15) from the outflow port 17 disposed at the lower end of the case 11. In the case 11, fuel (refrigerant) flows downward from the inflow port 16 toward the outflow port 17. The temperature inside the case 11 (inside the heat absorbing flow path 15) is higher on the upper end side than the lower end side, but the low-temperature fuel flows into the upper end of the case 11. Accordingly, the temperature gradient between the high- temperature power storage module 12 and the low-temperature fuel (refrigerant) is large in the upper end side inside the case 11. Thus, a heat transfer coefficient from the power storage module 12 to the fuel (refrigerant) is high, so that the power storage module 12 can be effectively cooled.

### <Second Embodiment>

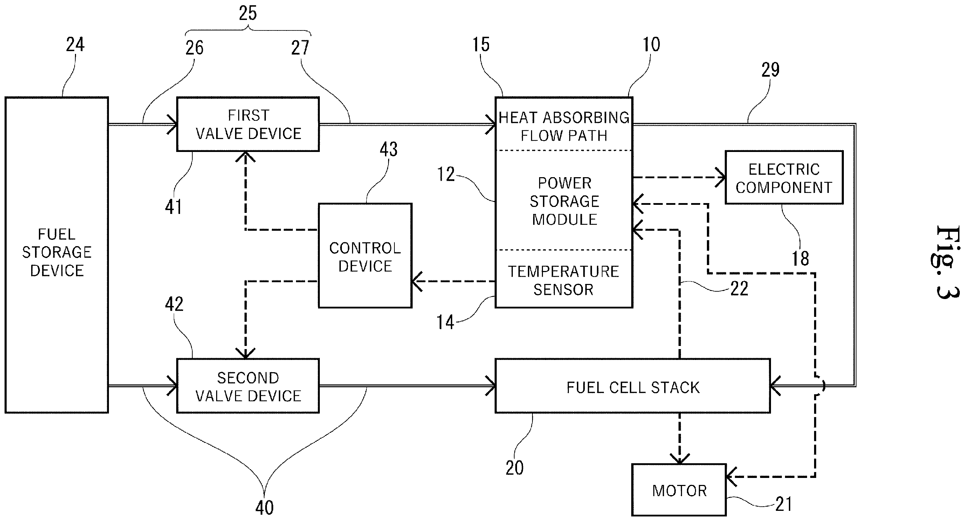

Next, a second embodiment embodying the present disclosure will be described with reference to Fig. 3. In a cooling system B of the second embodiment, a part of a path for feeding fuel from a fuel storage device 24 to a fuel cell stack 20 has a configuration different from that of the first embodiment. Since the other configurations are the same as those of the first embodiment, the same configurations are denoted by the same reference signs, and description of the structures, operations, and effects is omitted.

The cooling system B of the second embodiment includes a secondary battery 10, the fuel cell stack 20, the fuel storage device 24, a first fuel flow path 25, a second fuel flow path 29, a first valve device 41, a second valve device 42, and a control device 43. The secondary battery 10, the fuel cell stack 20, the fuel storage device 24, the first fuel flow path 25, and the second fuel flow path 29 have the same configurations as those of the first embodiment.

An upstream end of a direct feed flow path 40 is connected to the fuel storage device 24. A downstream end of the direct feed flow path 40 is connected to the fuel cell stack 20. The direct feed flow path 40 is a flow path that feeds fuel stored in the fuel storage device 24 to the fuel cell stack 20 in a vaporized gas state without passing through a heat absorbing flow path 15 (the secondary battery 10) .

The first valve device 41 is provided in the middle of the first fuel flow path 25. The first valve device 41 includes an opening/closing mechanism (not illustrated) that opens and closes the first fuel flow path 25. The first valve device 41 includes a flow rate adjustment mechanism (not illustrated) that adjusts a flow rate of fuel in the first fuel flow path 25 in a state where the first fuel flow path 25 is opened. The second valve device 42 is provided in the middle of the direct feed flow path 40. The second valve device 42 includes an opening/closing mechanism (not illustrated) that opens and closes the direct feed flow path 40. The second valve device 42 includes a flow rate adjustment mechanism (not illustrated) that adjusts a flow rate of fuel in the direct feed flow path 40 in a state where the direct feed flow path 40 is opened.

The opening/closing mechanism and the flow rate adjustment mechanism of the first valve device 41 and the opening/closing mechanism and the flow rate adjustment mechanism of the second valve device 42 are controlled by the control device 43 including a vehicle ECU. Detection information from a temperature sensor 14, operation information of an accelerator pedal during traveling of a vehicle, operation information of a steering wheel, operation information of a brake pedal, and the like are input to the control device 43. The control device 43 controls the opening/closing mechanism and the flow rate adjustment mechanism of the first valve device 41, and the opening/closing mechanism and the flow rate adjustment mechanism of the second valve device 42, individually, based on the input various types of information described above.

Next, the operation of the second embodiment will be described. When the temperature of the secondary battery 10 is within a normal range and a power storage module 12 does not need to be cooled, the first valve device 41 closes the first fuel flow path 25 under the control of the control device 43, so that the feed of fuel (refrigerant) to the secondary battery 10 (heat absorbing flow path 15) is stopped. During this period, when electric power generation is required, the second valve device 42 opens the direct feed flow path 40 under the control of the control device 43, so that the fuel of the fuel storage device 24 is fed to the fuel cell stack 20 through a path passing through the direct feed flow path 40.

When the temperature of the secondary battery 10 rises, the control device 43 controls the first valve device 41 on the basis of detection information from the temperature sensor 14, so that the first fuel flow path 25 is opened, and low-temperature fuel (vaporized gas) is fed into the heat absorbing flow path 15 as a refrigerant. Since the fuel in the vaporized gas state takes away the heat of cells 13 in the process of passing through the heat absorbing flow path 15, the power storage module 12 of the secondary battery 10 is cooled. The fuel that has passed through the heat absorbing flow path 15 is fed to the fuel cell stack 20 via the second fuel flow path 29.

While the secondary battery 10 is cooled, the fuel cell stack 20 generates electric power by the fuel fed via the heat absorbing flow path 15. In a case where an electric power generation amount is insufficient only by the fuel passing through the heat absorbing flow path 15, the fuel is fed to the fuel cell stack 20 through the direct feed flow path 40. In a case where more electric power than necessary is generated in the fuel cell stack 20 while the secondary battery 10 is cooled, surplus electric power of the electric power generated in the fuel cell stack 20 is fed to the power storage module 12 through the charging circuit 22 to charge the secondary battery 10.

The cooling system B of the second embodiment includes the first valve device 41 provided in the first fuel flow path 25, the direct feed flow path 40, and the second valve device 42. The first valve device 41 adjusts a flow rate of the fuel (refrigerant) in the first fuel flow path 25. The direct feed flow path 40 is a flow path that feeds the fuel stored in the fuel storage device 24 to the fuel cell stack 20 through a path not passing through the first fuel flow path 25 and the heat absorbing flow path 15. The second valve device 42 is provided in the direct feed flow path 40 and adjusts a flow rate of the fuel in the direct feed flow path 40.

According to this configuration, it is possible to perform the following operations individually: switching between feed and feed stop of the fuel to the heat absorbing flow path 15, adjustment of an amount of the fuel fed to the heat absorbing flow path 15, switching between feed and feed stop of the fuel to the fuel cell stack 20 via the direct feed flow path 40, and adjustment of an amount of the fuel fed to the fuel cell stack 20 via the direct feed flow path 40, based on a temperature of the secondary battery 10, an amount of electric power generation required for the fuel cell stack 20, and the like.

The cooling system B includes the temperature sensor 14 that detects a temperature of the secondary battery 10 (power storage module 12), and the control device 43. The control device 43 controls the first valve device 41 and the second valve device 42 based on a detection value of the temperature sensor 14. According to this configuration, since the feed of the fuel to the heat absorbing flow path 15 can be controlled by controlling the first valve device 41 according to the temperature of the secondary battery 10, overheating and supercooling of the secondary battery 10 can be prevented. By controlling the second valve device 42 in accordance with the change of the flow rate to the heat absorbing flow path 15, an amount of the fuel fed to the fuel cell stack 20 by the direct feed flow path 40 can be appropriately adjusted.

Based on the temperature of the secondary battery 10, the traveling state, the accelerator work, the use state of electric components, and the like, The control device 43 switches each of the first valve device 41 and the second valve device 42 to two modes. The first valve device 41 is switched between a cooling mode for feeding fuel (refrigerant) to the heat absorbing flow path 15 and a non-cooling mode for stopping the feed of fuel to the heat absorbing flow path 15. In the cooling mode, the flow rate of the fuel (refrigerant) fed to the heat absorbing flow path 15 is also adjusted. The second valve device 42 is switched between an electric power generation mode in which fuel is fed to the fuel cell stack 20 via the direct feed flow path 40 and a non-electric power generation mode in which fuel feed to the fuel cell stack 20 via the direct feed flow path 40 is stopped. In the electric power generation mode, the flow rate of the fuel fed to the fuel cell stack 20 is adjusted at the same time.

Since the mode switching of the first valve device 41 and the mode switching of the second valve device 42 are performed independently of each other, a feed form of fuel to the heat absorbing flow path 15 and the fuel cell stack 20 can be switched to the following four modes. In the first mode, fuel is fed to the heat absorbing flow path 15, and fuel is fed to the fuel cell stack 20 via the direct feed flow path 40. In the second mode, fuel is fed to the heat absorbing flow path 15, and feed of fuel to the fuel cell stack 20 via the direct feed flow path 40 is stopped. In the third mode, feed of fuel to the heat absorbing flow path 15 is stopped, and fuel is fed to the fuel cell stack 20 via the direct feed flow path 40. In the fourth mode, feed of fuel to the heat absorbing flow path 15 and feed of fuel to the fuel cell stack 20 via the direct feed flow path 40 are stopped.

### <Other Embodiments>

The present invention is not limited to the embodiments described with reference to the above description and drawings, and for example, the following embodiments are also included in the technical scope of the present invention.

The fuel storage device may include only a tank without using the occlusion alloy.

The fuel fed to the fuel cell stack is not limited to hydrogen, and may be methylcyclohexane, formic acid, ethanol, methanol, hydrazine, ammonia borane, dimethyl ether, formaldehyde, or the like.

Among the above fuels, fuel having an inversion temperature lower than an environmental temperature at which the cooling system is used is stored in an occlusion state by the occlusion alloy. Among the above fuels, a method of storing fuel having an inversion temperature higher than an environmental temperature at which the cooling system is used may be any of a liquid state, a gas state, and an occlusion state.

When the fuel stored in the fuel storage device is fed to the heat absorbing flow path, the fuel is preferably in a gaseous state. Therefore, fuel fed to the fuel cell stack as liquid like ammonia is not suitable for the cooling system of the present invention.

### Reference Signs List

- A, B: cooling system
- 10: secondary battery
- 12: power storage module
- 14: temperature sensor
- 15: heat absorbing flow path
- 20: fuel cell stack
- 24: fuel storage device
- 25: first fuel flow path
- 28: valve device
- 29: second fuel flow path
- 30: bypass flow path
- 31, 43: control device
- 40: direct feed flow path
- 41: first valve device
- 42: second valve device

## Claims

1. A cooling system for a secondary battery, **characterized in that** the cooling system comprising:
a secondary battery including a power storage module and a heat absorbing flow path that is a flow path of a refrigerant for cooling the power storage module;
a fuel cell stack that generates electric power by being fed with fuel;
a fuel storage device that stores the fuel in a state where the fuel can be discharged as gas;
a first fuel flow path that feeds the fuel stored in the fuel storage device to the heat absorbing flow path in a gaseous state; and
a second fuel flow path that feeds the fuel having passed through the heat absorbing flow path to the fuel cell stack.

2. The cooling system for a secondary battery according to claim 1, further comprising:
a valve device provided in the first fuel flow path; and
a bypass flow path that connects the valve device and the fuel cell stack, and
the valve device has a function of adjusting a flow rate of the fuel fed to the heat absorbing flow path, and a function of adjusting a flow rate of the fuel fed to the fuel cell stack via the bypass flow path.

3. The cooling system for a secondary battery according to claim 2, further comprising:
a temperature sensor that detects a temperature of the secondary battery; and
a control device that controls the valve device based on a detection value of the temperature sensor.

4. The cooling system for a secondary battery according to claim 1, further comprising:
a first valve device that is provided in the first fuel flow path and adjusts a flow rate of the fuel in the first fuel flow path;
a direct feed flow path that feeds the fuel stored in the fuel storage device to the fuel cell stack through a path that does not pass through the heat absorbing flow path; and
a second valve device that is provided in the direct feed flow path and adjusts a flow rate of the fuel in the direct feed flow path.

5. The cooling system for a secondary battery according to claim 4, further comprising:
a temperature sensor that detects a temperature of the secondary battery; and
a control device that controls the first valve device and the second valve device based on a detection value of the temperature sensor.
